# EUROPEAN PATENT APPLICATION

(11) **EP 1 343 092 A2**
(43) Date of publication of application: **10.09.2003**
(21) Application number: 03251156.0
(22) Date of filing: 26.02.2003
(51) Int. Cl.: G06F 13/40

(54) **Device with interface recognizing ability**

(30) Priority: 26.02.2002 JP 2002049049
(71) Applicant: ALPS ELECTRIC CO., LTD., Ota-ku Tokyo 145 (JP)
(72) Inventor: Yoshida, Toru, Alps Electric Co.,Ltd., Tokyo (JP)
(74) Representative: Kensett, John Hinton

(57) **Abstract**

A device with an interface recognizing ability, capable of easily recognizing which interface is utilized, without provision of a separate electric circuit, the device comprises a USB connector (2) corresponding to a personal computer (8) and a USB connector (3) corresponding to a digital still camera (20), and a CPU (30) is installed to detect voltage supplied from the personal computer to recognize that a USB corresponding to the personal computer is utilized when the voltage is higher than 4.75 volts and in the event of the voltage being lower than 4.75 volts, to apply voltage of 5 volts to the digital still camera to recognize that a USB corresponding to the digital still camera is utilized when voltage of a data signal from the digital still camera is higher than 2 volts.

## Description

### BACKGROUND OF THE INVENTION

### 1. Field of the Invention

The present invention relates to a device with an interface recognizing ability, and particularly, to a device with an interface recognizing ability, being a peripheral device, to which a host device and a peripheral device can be coupled.

### 2. Description of the Related Invention

Conventionally, new interfaces such as USB (Universal Serial Bus) or IEEE1394, which can deal with a wide range of peripheral devices, in addition to serial interface and parallel interface, have been known in recent years as means for coupling various peripheral devices to a host device.

The peripheral devices include one formed with connectors of an interface for direct coupling to other peripheral devices, in addition to a connector of an interface corresponding the host device.

However, data communication between the host device and peripheral devices is different in communication protocol or the like from that between respective peripheral devices. Therefore, in order to surely make transmission and reception of data, it is necessary in the peripheral devices described above to recognize which of the peripheral devices is coupled to the host device and which of interfaces is utilized.

Hereupon, devices with an interface recognizing ability have been conventionally known to comprise a peripheral device capable of recognizing which of interfaces of a host device and peripheral devices is utilized.

Such devices with an interface recognizing ability are separately provided with a connector for coupling to a host device and a connector for coupling to a peripheral device. Also, a shutter is mounted on openings of these connectors, the shutter being adapted to move between an opening of one of the connectors and an opening of the other of the connectors to close the opening of the other of the connectors while the opening of one of the connectors is opened. Also, a switch is provided in the vicinity of the shutter to sense that the shutter is opened, and further the device with an interface recognizing ability is provided with a detection unit for recognizing which of the connectors is utilized and which of interfaces is utilized, according to sensing of opening of the shutter with the switch.

And when sensing that a data signal is transmitted from the host device or an external device such as other peripheral devices, and that the shutter is opened, the detection unit of the device with an interface recognizing ability determines that a connector as opened is utilized and thereby recognizes which of interfaces is utilized.

Since the device with an interface recognizing ability recognizes which of interfaces is utilized, according to opening of the shutter, however, there is a need of a detection unit for detecting opening of the shutter, as described above. Therefore, in the case where which of interfaces is utilized is to be recognized, there is caused a need of another electric circuit, which constitutes the detection unit, separately from an electric circuit of a general device with an interface recognizing ability, so that there is caused a problem that the number of parts for fabrication of another electric circuit increases to lead to an increase in assembly process and in manufacturing cost.

### SUMMARY OF THE INVENTION

The invention has been thought of in view of these points, and has its object to provide a device with an interface recognizing ability, capable of easily recognizing which of interfaces is utilized, without provision of a separate electric circuit.

Also, a further object of the invention is to provide a device with an interface recognizing ability having a connector of an interface corresponding to a host device and a connector of an interface corresponding to a peripheral device, characterized by that a CPU is installed to detect voltage supplied from the host device to recognize that the interface corresponding to the host device is utilized when the voltage is higher than a predetermined value, and to apply a constant voltage to the peripheral device, when the voltage is lower than the predetermined value, to recognize that the interface corresponding to the peripheral device is utilized when a value of voltage of a data signal transmitted from the peripheral device is higher than a further predetermined value.

Here, the predetermined value is set to a value a little lower than voltage supplied from the host device, and the further predetermined value is set to a value a little lower than voltage used when a peripheral device sends a data signal to the device with an interface recognizing ability.

The device with an interface recognizing ability, according to the invention, detects voltage supplied from the host device, or voltage of a data signal sent from a peripheral device to determine whether the voltages are higher than the predetermined values or not, thereby enabling easily recognizing which of interfaces of the host device and the peripheral device is utilized.

Further, a still further object of the invention is to provide a further device with an interface recognizing ability, in which the interface connector is USB, a USB connector corresponding to the host device is a connector of a B series, and a USB connector corresponding to the peripheral device is a connector of an A series.

The further device with an interface recognizing ability, according to the invention, detects voltage supplied from the host device, or voltage of a data signal sent from a peripheral device to determine whether the voltages are higher than the predetermined values or not, thereby enabling easily recognizing which of USBs of the host device and the peripheral device is utilized.

An embodiment of the present invention will now be described, by way of example only, with reference to the accompanying diagrammatic drawings, in which:
Fig. 1 is a circuit diagram showing an electric circuit configuration of an embodiment of a device with an interface recognizing ability, according to the invention; and
Fig. 2 is a flowchart of a procedure for recognizing which interface is utilized in the device with an interface recognizing ability, shown in Fig. 1.

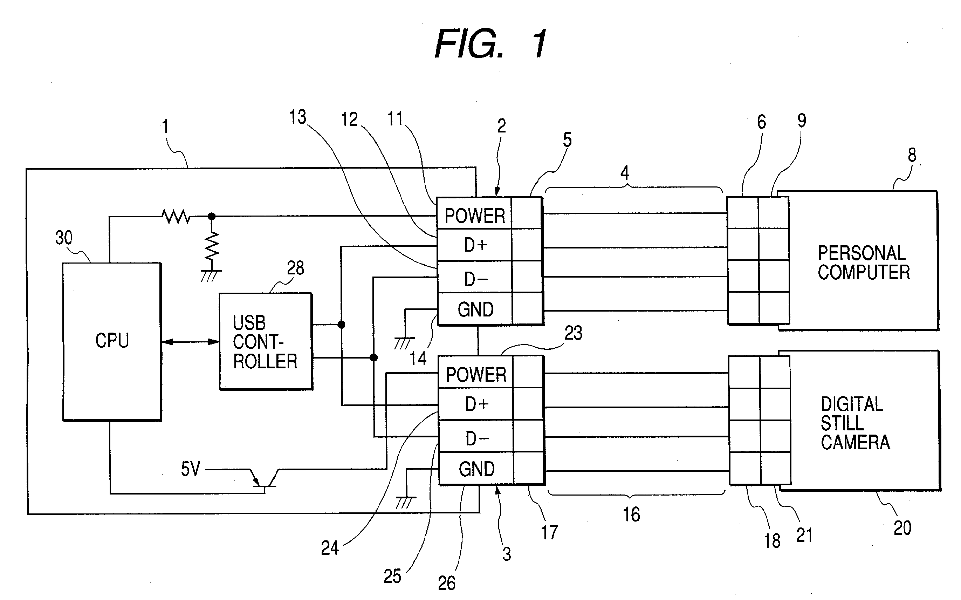

Fig. 1 is a circuit diagram showing an electric circuit configuration in the case where a printer as a device with an interface recognizing ability according to the embodiment is coupled to a host device or another peripheral device, and two connectors 2, 3 of USB as an interface are formed on the printer 1 as shown in Fig. 1.

One 2 of the two connectors 2, 3 is a connector 2 of a series B, into which a connector 5 of the series B formed on one end of a USB cable 4 is inserted. Further, a connector 6 of a series A formed on the other end of the USB cable 4 is inserted into a connector 9 of the series A formed on a personal computer 8 as a host device, whereby the printer 1 is electrically coupled to the personal computer 8. A power supply terminal 11, two signal terminals 12, 13, and a GND terminal 14 are formed on the respective USB connectors 2, 3 formed on the printer 1, and a predetermined voltage is supplied to the printer 1 through the power supply terminal 11 from the personal computer 8. Here, voltage of 5 volts is applied to the power supply terminal 11 of the printer 1 when the personal computer 8 is coupled to the printer 1. Further, the printer 1 sends and receives two kinds of data signals D+, D- from the personal computer 8 via the respective signal terminals 12, 13.

Also, the other 3 of the two connectors 2, 3 is a connector 3 of the series A, into which a connector 17 of the series A formed on one end of a USB cable 16 is inserted. Further, a connector 19 of the series B formed on the other end of the USB cable 16 is inserted into a connector 21 of the series B formed on a digital still camera 20 as a peripheral device, whereby the printer 1 is electrically coupled to the digital still camera 20. And the printer 1 supplies voltage of 5 volts to the digital still camera 20 via a USB power supply circuit 23. Further, the printer 1 sends and receives two kinds of data signals D+, D- from the digital still camera 20 via the respective signal terminals 24, 25. Also, voltage above 2 volts is applied to the signal terminal 24, which serves as transmission and reception of the data signal D+, among the respective signal terminals 24, 25 at the time of transmission and reception of the data signal D+. Also, a GND terminal 26 is formed on the connector 3.

Further, installed on the printer 1 is a CPU 30 for controlling respective parts of a USB controller 28 and the printer 1. And the USB controller 28 receives data signals D+, D- from the personal computer 8 or the digital still camera 20 to make a comparison between the data signals D+, D- to transmit the same to the CPU 30, after determining a state of signals. Also, the CPU 30 sends a data signal to the USB controller 28, and the USB controller 28 converts the data signal into a data signal D+ and a data signal D- to send the same to the personal computer 8 or the digital still camera 20 via the respective signal terminals 12, 13, 24, 25. Also, the personal computer 8 supplies voltage of 5 volts to the CPU 30 via the power supply circuit 11, and further the CPU 30 applies voltage of 5 volts to the digital still camera 20 via the power supply circuit 23.

Subsequently, an explanation will be given to operation of the embodiment.

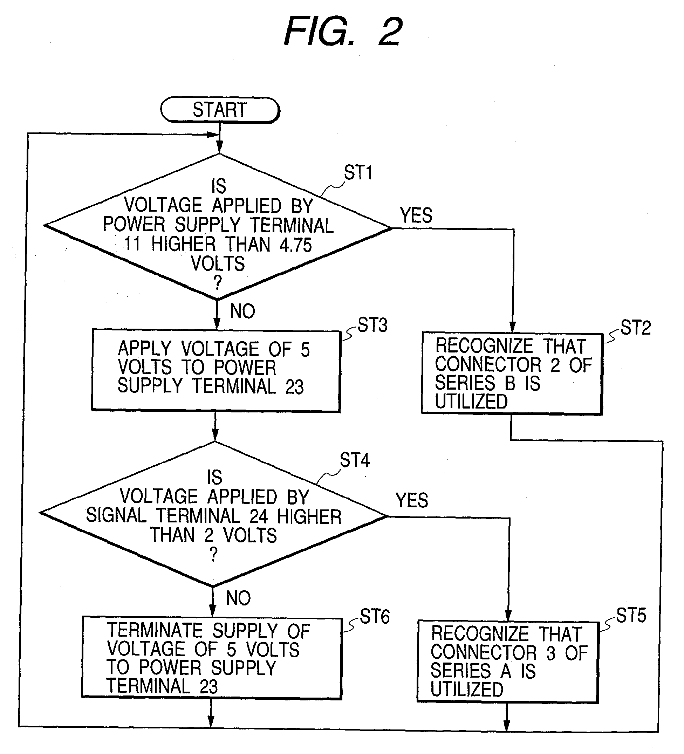

As shown by a flowchart of Fig. 2, when the printer 1 is first made ON, the CPU 30 of the printer 1 detects voltage applied by the power supply terminal 11 of the connector 2 of the series B to determine whether the voltage is higher than a predetermined value of 4.75 volts or not (ST1). At this time, in the case where the personal computer 8 is coupled to the printer 1, the personal computer 8 applies voltage of 5 volts via the power supply terminal 11 of the connector 2. Therefore, in the case where the detected voltage is higher than 4.75 volts (YES in ST1), it is recognized that voltage is applied from the personal computer 8 and the connector 2 of the series B is utilized in the printer 1 since the personal computer 8 is coupled thereto (ST2).

Meanwhile, in the case where voltage applied from the power supply terminal 11 of the connector 2 is lower than 4.75 volts (NO in ST1), the CPU 30 applies voltage of 5 volts to the power supply terminal 23 of the connector 3 of the series A (ST3).

Thereafter, voltage applied from the signal terminal 24 of the connector 3 is detected, and it is determined whether the voltage is higher than a predetermined value of 2 volts or not (ST4). Here, when voltage of 5 volts is applied via the power supply terminal 23, the digital still camera 20 senses coupling to an external device (the printer 1 in the embodiment) to send data signals D+, D- via the signal terminals 24, 25. At this time, the data signal D+ is sent at voltage above 2 volts. Therefore, in the case where the detected voltage is higher than 2 volts (YES in ST4), it is recognized that the data signal is sent from the digital still camera 20 and the connector 3 of the series A is utilized in the printer 1 since the digital still camera 20 is coupled thereto (ST5).

Meanwhile, in the case where voltage applied from the signal terminal 24 of the connector 3 is lower than 2 volts (NO in ST4), it is determined that the connector 3 of the series A is not utilized, and supply of voltage of 5 volts to the power supply terminal 23 of the connector 3 of the series A is terminated (ST6). And after supply of voltage to the power supply terminal 23 of the connector 3 is terminated, the above operation is again repeated. Further, after it is recognized that the connector 2 of the series B is utilized in the printer 1 (ST2), or it is recognized that the connector 3 of the series A is utilized (ST5), the above operation is also repeated. Thereby, even in the case where coupling of the connectors 2, 3 is released and either of the interfaces is terminated, it is always possible to recognize which of the interfaces is utilized in the printer 1 in the case where the printer 1 is made ON.

According to the embodiment, which of the connector 2 of the series B and the connector 3 of the series A is utilized in the printer 1 can be recognized by detecting voltage applied to the power supply terminal 11 of the connector 2 of the series B to determine whether the voltage is higher than the predetermined value of 4.75 volts or not, applying voltage to the power supply terminal 23 of the connector 3 of the series A to detect voltage applied to the signal terminal 24 of the connector 3 to determine whether the voltage is higher than the predetermined value of 2 volts or not.

Accordingly, the electric circuit in the CPU 30 of the printer 1 can be used to easily recognize which USB is utilized, without provision of a separate electric circuit, which constitutes a detection unit for recognizing which USB is utilized for a personal computer or a digital still camera, as in the prior art. As a result, transmission and reception of data signals can be surely made between the printer 1 and the personal computer 8 or between the printer 1 and the digital still camera 20. Therefore, the number of parts of the printer 1 is reduced, assembly processes are reduced, and so it is possible to reduce a manufacturing cost.

Also, it is possible to couple the digital still camera 20 directly to the printer 1 to output image data of a photograph taken by the digital still camera 20 directly to a recording medium from the printer 1. Therefore, it is possible to easily output image data to a recording medium while saving labor taken in once inputting image data of the photograph of the digital still camera 20 in the personal computer 8 and then outputting the same by means of the printer 1.

In addition, the invention is not limited to the embodiment but can be variously modified at need.

For example, while the embodiment has been explained using the printer 1 as a device with an interface recognizing ability, it is not limited thereto but the device may be other peripheral devices, which can be coupled to a host device and peripheral devices. Also, while the above explanation has been made using the personal computer 8 as a host device, such host device is not limited thereto but may be a large computer. Further, while the above explanation has been made using the digital still camera 20 as a peripheral device coupled to a device with an interface recognizing ability, such peripheral device is not limited thereto but may be other peripheral devices such as digital still cameras.

Also, while USB is used as an interface, it is not limited thereto but other interface capable of coupling, for example, between a host device such as IEEE1394 and peripheral devices and between peripheral devices themselves may be made use of.

As described above, with a device with an interface recognizing ability, according to the invention, an electric circuit in CPU can be used to easily recognize which interface is utilized, without provision of a separate electric circuit for recognizing which interface is utilized, as in the prior art. As a result, transmission and reception of data signals can be surely made between a device with an interface recognizing ability and a host device or between a device with an interface recognizing ability and a peripheral device.

Also, with other device with an interface recognizing ability, according to the invention, an electric circuit in CPU can be used to easily recognize which USB is utilized, without provision of a separate electric circuit for recognizing which USB is utilized, as in the prior art. As a result, transmission and reception of data signals can be surely made between a device with an interface recognizing ability and a host device or between a device with an interface recognizing ability and a peripheral device.

## Claims

1. A device with an interface recognizing ability comprising a connector of an interface corresponding to a host device and a connector of an interface corresponding to a peripheral device, and wherein a CPU is installed to detect voltage supplied from the host device to recognize that the interface corresponding to the host device is utilized when the voltage is higher than a predetermined value, and to apply a constant voltage to the peripheral device, when the voltage is lower than the predetermined value, to recognize that the interface corresponding to the peripheral device is utilized when a value of voltage of a data signal transmitted from the peripheral device is higher than a further predetermined value.

2. The device with an interface recognizing ability, according to claim 1, wherein the interface is USB, a USB connector corresponding to the host device is a connector of a B series, and a USB connector corresponding to the peripheral device is a connector of an A series.
